# EUROPÄISCHE PATENTSCHRIFT

(11) **EP 3 550 162 B1**
(45) Veröffentlichungstag und Bekanntmachung des Hinweises auf die Patenterteilung: **20.01.2021**
(21) Anmeldenummer: 19172315.4
(22) Anmeldetag: 01.03.2017
(51) Int. Cl.: F16C 1/14, B60J 7/057, F16C 1/20

(54) **VERFAHREN ZUR HERSTELLUNG EINES STEIGUNGSKABELS**
METHOD FOR PRODUCING A TRANSMISSION CABLE
PROCÉDÉ DE FABRICATION D'UN CÂBLE D'ENTRAÎNEMENT

(30) Priorität: 16.03.2016 DE 102016104918
(43) Veröffentlichungstag der Anmeldung: 09.10.2019
(62) Teilanmeldung aus: 17709613.8
(73) Patentinhaber: Küster Holding GmbH, 35630 Ehringshausen (DE)
(72) Erfinder: SCHERLE, Artur, 35581 Wetzlar - Münchholzhausen (DE); REINHARDT, Günter, 34614 Wehrdorf (DE); ECKHARDT, Markus, 35756 Mittenaar - Offenbach (DE)
(74) Vertreter: Müller, Eckhard

(56) Entgegenhaltungen:
- DE-A1- 3 015 965
- DE-A1-102007 041 233
- DE-A1-102008 005 983
- DE-A1-102012 110 257

## Beschreibung

Die Erfindung betrifft ein Verfahren zur Herstellung eines Steigungskabels, insbesondere für die Betätigung von Schiebedächern oder Laderaumabdeckungen von Fahrzeugen, an dem an einem Abschnitt des Steigungskabels. insbesondere an seinem einen Ende, eine Abschlusshülse zur Vermeidung des Aufspleißens des Kabels befestigt wird.

Steigungskabel der eingangs genannten Art, welche auch als Antriebskabel oder Flex-Welle bekannt sind, werden bevorzugt bei Hebe- und/oder Schiebedächern, Beschattungsrollos und Laderaumabdeckungen von Kraftfahrzeugen eingesetzt. Die Steigungskabel sind beispielsweise mittels einer motorangetriebenen Schnecke axial verstellbar und an einem zu verstellenden Bauteil, beispielsweise an dem Schiebedach, über Mitnehmer gekoppelt, d.h. die Mitnehmer sorgen hier auch für die Kraftübertragung. Die Steigungskabel werden meist aus mehreren Litzen bestehenden Metallseilen mit aufgebrachten Steigungswendeln als Endlosware hergestellt und müssen anschließend auf die benötigte Länge abgelängt werden. Das Schiebedach wird dabei an beiden Seiten mit je einem Mitnehmer eines Steigungskabels gekoppelt. Es sind auch konstruktive Ausgestaltungen bekannt, bei denen zwei Steigungskabel um den Dachausschnitt des Schiebedaches herum zu einem gemeinsamen Antrieb verlaufen, an dem sie mit einem Zahnrad in Eingriff stehen, das in die Windungsabstände des Steigungskabels eingreift und diese wie eine Zahnstange betätigt.

Die DE 30 15 965 A1 beschreibt eine Zusammenbau-Führung für die Bewegung eines Schiebedaches. Die Zusammenbau-Führung besteht aus einem Bedienungskabel mit einer Seele aus Stahldraht und einem Führungskörper aus Kunststoff, an den eine Hülse angeformt ist, in der eine Seele befestigt ist. Die Seele ist dabei mit der Hülse zug-und drehfest verschweißt. Die Seele ist mit einer Spiralwicklung aus einem einzelnen Draht versehen. Ein Ende des Drahtes der Spiralwicklung ist mit der Seele durch eine Endplombe verplombt. Die mechanisch verstemmte Endplombe verbindet die Seele fest mit dem Stahldraht der Spiralwicklung und dient zugleich als Befestigungspunkt einer Einhakmontage am Dach des Kraftfahrzeuges, in die die Zusammenbau-Führung eingesetzt wird.

Aus der WO 2012/084082 A1 geht ein Steigungskabel hervor, das einen Kern aufweist, der aus verdrehten Drähten besteht. Der Kern ist fest mit einer Wendel umwickelt, die hohe Kräfte in Achsrichtung des Kernes aufnehmen soll. Der Kern weist einen Endbereich auf, der eine Bohrung in einem Bohrungsteil des Mitnehmers durchläuft. Am Ende des Kernes ist ein Anschlagkörper befestigt. Der Anschlagkörper aus verformbarem Metall ist mit einem Schlag an der Kerbe auf dem Kern festgesetzt. Er liegt mit einer Fläche gegen das Ende des Bohrungsteiles, während das andere Ende des Bohrungsteiles gegen das Ende der Wendel liegt.

Die DE 26 59 268 A1 offenbart einen Endabschluss eines Zug und Druckkräfte übertragenden Kabels in Form einer Hülse, die auf das Kabel in axialer Richtung aufgeschraubt ist. Durch die Überwurfmutter in der DE 26 59 268 A1 soll eine technisch einfache Sicherung des Endabschlusses bereitgestellt werden. Die Hülse ist dabei kein Teil, das bei seiner Bewegung ein anderes Teil ebenfalls in Bewegung setzt, d.h. der Kraftübertragung dient. Die Hülse in der DE 26 59 268 A1 ist zur Befestigung des Kabelendes an einem elektrischen Hauptschalter eines Fahrzeugs vorgesehen.

DE 10 2012 110 257 A1 offenbart eine automatisierte Fixierung einer Abschlusshülse an einem Ende eines Steigungskabels gemäß dem Oberbegriff des Anspruchs 1. Die Fixierung wird durch Erwärmung der gesamten Außenfläche der Abschlusskappe durch Ultraschallschweißen ausgeführt. Beim Ultraschallschweißen gemäß DE 10 2012 110 257 A1 findet die Verbindung zwischen Abschlusskappe und Kabel nur punktuell oder über den Umfang der Bohrung statt. Eine Abschlusshülse ist auch in der DE 10 2008 005 983 A1 beschrieben.

Die aus dem Stand der Technik bekannten abgelängten Steigungskabel neigen aufgrund der losen Einzeldrähte des Kabels zum Aufspleißen. Ein weiteres Problem der bekannten Steigungskabel ist es, dass sie in montiertem Zustand an den Enden zum Klappern neigen. Erfindungsgemäß ist ein Verfahren gemäß Anspruch 1 vorgesehen, wobei das Steigungskabel an einem Abschnitt, insbesondere an seinem zweiten Ende, mit einer Abschlusshülse versehen ist. Die vorgesehene Abschlusshülse vermeidet die obengenannten Nachteile. Erfindungsgemäß weist die Abschlusshülse eine Bohrung auf, deren Wandung wiederum eine zu der Steigungswendel korrespondierende Form aufweist.

Die Befestigung bzw. Fixierung der Abschlusshülse an dem Steigungskabelende erfolgt automatisch, beispielsweise durch Ultraschallschweißung oder Anschmelzung.

Erfindungsgemäß wird der Steigungskabel induktiv erhitzt. In einer bevorzugten Variante wird der Bereich des Steigungskabels, an dem die Fixierung der Abschlusshülse erfolgen soll, vor der Montage von Abschlusshülse induktiv erhitzt. Beim Fügen von Steigungskabel und Abschlusshülse kommt es dann in diesem Bereich zu einer Verschmelzung oder Anschmelzung oder Verschweißung.

Die Anschmelzung oder die Verschmelzung von Steigungskabel und Abschlusshülse dient dabei der Fixierung der Abschlusshülse an dem Steigungskabel.

Erfindungsgemäß erfolgt die Fixierung der Abschlusshülse an dem Steigungskabel.

Dabei kann vorgesehen sein, dass das Ende des Steigungskabels vor dem Verbinden mit der Abschlusshülse so bearbeitet wird, dass das Ende, der Endbereich bzw. die Spitze des Steigungskabels für eine Verbindung mit der Abschlusshülse angepasst wird. Beispielsweise kann die Form des Endes des Steigungskabels wenigstens teilweise an die dazu korrespondierende Aufnahme in der Abschlusshülse angepasst werden.

Beispielsweise wird zur Fixierung lediglich der Endbereich bzw. die Spitze des Steigungskabels, welche bevorzugt konisch angeschliffen ist, z.B. in einem Winkel zwischen Achse und Außenwandung des Kabels von 10° bis 30°, bevorzugt 15°, induktiv erhitzt.

Bevorzugt weist die Abschlusshülse eine Bohrung mit einer kohärent ausgebildeten Form auf.

Auf den so vorbereiteten Endbereich des Steigungskabels wird eine bevorzugt aus Kunststoff bestehende Abschlusshülse montiert, so dass eine Fixierung durch Anschmelzung der Abschlusshülse auf dem Kabelende erfolgen kann.

Gemäß einer weiteren vorteilhaften Ausgestaltung der Erfindung kann zur Erhöhung der Verbindungsfestigkeit an dem Ende des Steigungskabels eine Verrippung oder eine Rändelung angebracht sein.

Weitere Ziele, Vorteile, Merkmale und Anwendungsmöglichkeiten der vorliegenden Erfindung ergeben sich aus der nachfolgenden Beschreibung von Ausführungsbeispielen anhand der Figur.

Es zeigt in schematischer Darstellung:
- Fig. 1: in einer perspektivischen Ansicht ein Steigungskabel gemäß der Erfindung;
- Fig. 2: in einer perspektivischen Ansicht den Mitnehmer des Steigungskabels aus Figur 1;
- Fig. 3: in einer perspektivischen Ansicht den Ablauf eines nicht beanspruchten Verfahrens;
- Fig. 4: in einer perspektivischen Ansicht ein abgelängtes Steigungskabel
- Fig. 5: in einer perspektivischen Ansicht ein weiterer Schritt im Rahmen des erfindungsgemäßen Verfahrens und
- Fig. 6: in einer perspektivischen Ansicht ein nicht beanspruchter weiterer Schritt des Verfahrens.

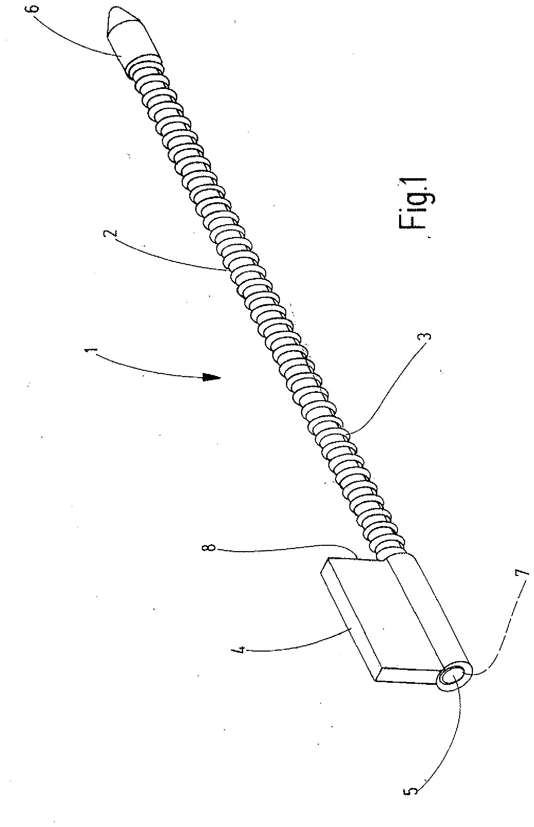

Fig. 1 zeigt ein Steigungskabel, das mit dem Bezugszeichen 1 versehen ist.

Das Steigungskabel 1 weist einen Kern 2 auf, der bei dem hier gewählten Ausführungsbeispiel aus mehrlagig gegenläufig übereinander gewickelten Drähten gebildet ist, welche aus Metall oder Kunststoff bestehen.

Wie aus Figur 1 zudem hervorgeht, ist auf den Kern 2 eine Steigungswendel 3 aus Draht aufgewickelt.

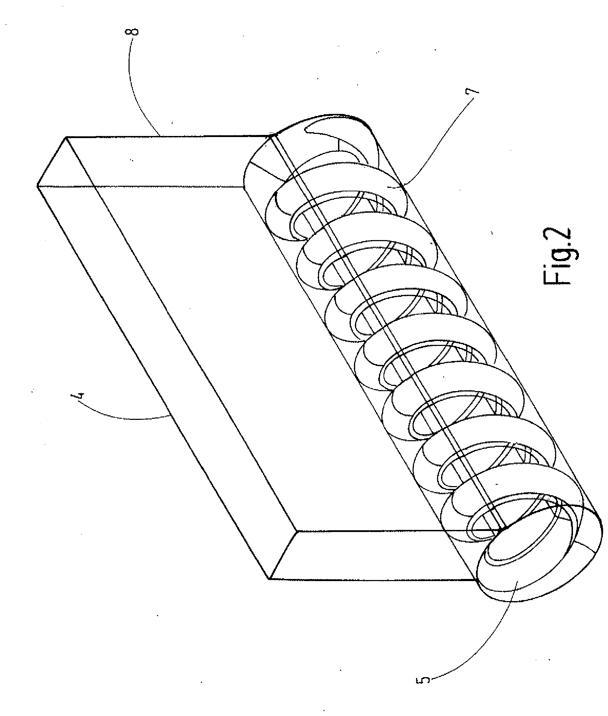

Das Steigungskabel 1 ist, wie Figur 1 weiter verdeutlicht, mit einem an seinem einen Ende angeordneten Mitnehmer 4 versehen. Der Mitnehmer 4 ist auf dem Steigungskabel 1 fixiert und weist eine Bohrung 5 auf, in der ein zu der Steigungswendel 3 korrespondierender in Figur 2 gezeigter Innenabschnitt 7 in Form eines Innengewindes gezeigt ist, ausgebildet ist. Der Innenabschnitt 7 stellt gleichzeitig die Wandung der Bohrung 5 dar.

Figur 1 zeigt weiterhin, dass das Steigungskabel 1 an seinem zweiten Ende mit einer Abschlusshülse 6 versehen ist, die den Abschluss des Steigungskabels 1 bildet und an dem das Steigungskabel 1 befestigt ist. Die Abschlusshülse 6 ist dabei automatisiert auf das Steigungskabel 1 aufgebracht worden.

Der in Figur 2 gezeigte Mitnehmer 4 ist mit einem Flächenelement 8, das, abstehend von dem Mitnehmer 4, für die Kopplung mit einem beweglichen Schiebeelement, wie beispielsweise einem Schiebedach eines Kraftfahrzeugs, vorgesehen ist. Der Mitnehmer 4 weist, wie Figur 2 weiter verdeutlicht, den Innenabschnitt 7 in Form eines Innengewindes auf, das als Abguss ausgebildet ist. Zudem ist der Mitnehmer 4 als Kunststoffspritzgießteil getrennt von dem in Figur 1 gezeigten Steigungskabel 1 geformt, d.h. der in Figur 1 gezeigte Mitnehmer 4 ist zunächst nicht integraler Bestandteil des Steigungskabels 1 und von dem Steigungskabel 1 getrennt.

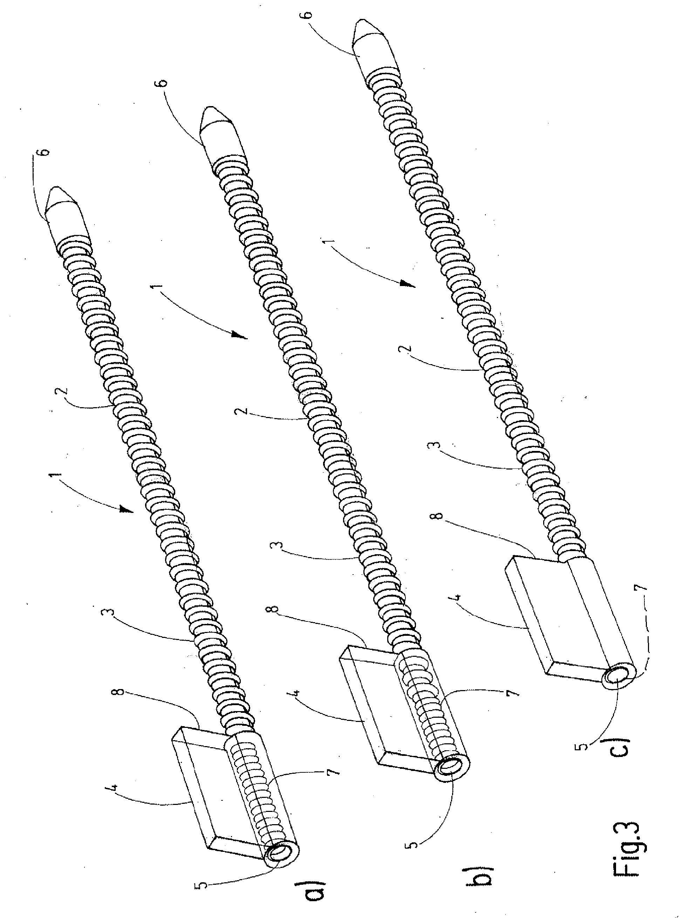

Die Figuren 3a bis 3c verdeutlichen den Ablauf der Verbindung und Vereinigung von Steigungskabel 1 und Mitnehmer 4.

Das Verfahren beginnt mit der Herstellung eines mit einer Steigungswendel 3 versehenen Steigungskabels 1 sowie mit der Herstellung eines mit einer Bohrung 5 versehenen Mitnehmers 4, wobei innerhalb der Bohrung 5 ein zu der Steigungswendel 3 korrespondierender Innenabschnitt 7 in Form eines Innengewindes ausgebildet wird.

Wie aus Figur 3a hervorgeht, ist der Mitnehmer 4 zunächst nicht integraler Bestandteil des Steigungskabels 1 und von diesem getrennt. Der in Figur 3a dargestellte Mitnehmer 4 wird als freifallendes Kunststoffspritzgießteil hergestellt.

In einem weiteren Schritt wird, wie Figur 3b verdeutlicht, das Steigungskabel 1 in den Mitnehmer 4 eingeschraubt. Hierzu dienen die Steigungswendel 3 und der zu der Steigungswendel 3 korrespondierende Innenabschnitt 7 des Mitnehmers 4, der in Form des Innengewindes vorliegt.

Schließlich erfolgt im Rahmen eines weiteren Verfahrensschrittes, der in Figur 3c dargestellt ist, die Fixierung des Mitnehmers 4 an einem Abschnitt des Steigungskabels, der in Figur 3c ein Ende des Steigungskabels 1ist. Diese Fixierung erfolgt in Form einer Ultraschallschweißung, Klebung, Anschmelzung oder Verschweißung.

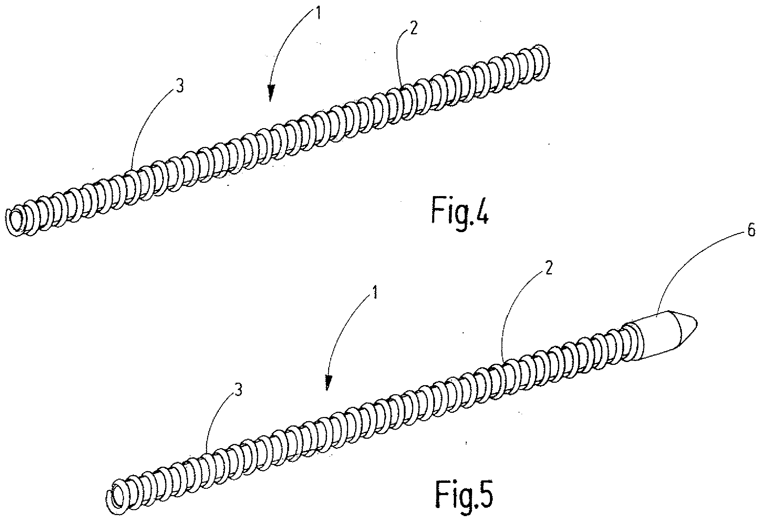

In das Verfahren sind weitere Schritte integriert. Figur 4 zeigt, dass bei der Herstellung des Steigungskabels 1, und zwar ausgehend von einem endlosen Steigungskabel, dieses zunächst, d.h. vor Aufbringung und Fixierung des in den Figuren 3a bis 3c gezeigten Mitnehmers 4, abgelängt wird. Erfindungsgemäß, nachdem das Steigungskabel abgelängt worden ist, kann, wie Figur 5 verdeutlicht, die Abschlusshülse auf ein Ende des Steigungskabel 1 automatisch aufgebracht werden.

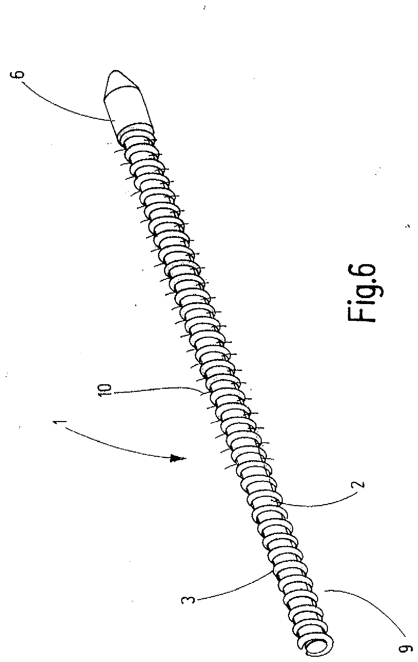

Wie Fig. 6 zeigt, ist das Steigungskabel 1 außerhalb des Mitnehmers 5 zwischen den Windungen der Steigungswendel 3 von Flockgarnfäden 10 eingewickelt, was der Geräuschvermeidung bei Bewegung des Steigungskabels 1 dient. In dem Bereich 9, auf den der Mitnehmer 4 aufgebracht wird, werden die Flockfäden 10 entfernt.

Die vorliegende Erfindung beschränkt sich in ihrer Ausführung nicht auf das vorstehend angegebene bevorzugte Ausführungsbeispiel. Vielmehr ist eine Anzahl von Varianten denkbar, deren Gegenstand unter die beigefügten Ansprüche fällt.

### Bezugszeichenliste

- 1: Steigungskabel
- 2: Kern
- 3: Steigungswendel
- 4: Mitnehmer
- 5: Bohrung
- 6: Abschlusshülse
- 7: Innenabschnitt
- 8: Flächenelement
- 9: Mitnehmerbereich
- 10: Fäden

## Patentansprüche

1. Verfahren zur Herstellung eines Steigungskabels (1), insbesondere für die Betätigung von Schiebedächern oder Laderaumabdeckungen von Fahrzeugen, an dem an einem Abschnitt des Steigungskabels (1), insbesondere an seinem zweiten Ende, eine Abschlusshülse (6) zur Vermeidung des Aufspleißens des Kabels (1) befestigt wird, umfassend folgende Verfahrensschritte:
a) Herstellung eines mit einer Steigungswendel (3) versehenen Steigungskabels (1) sowie Herstellung einer mit einer Bohrung (5) versehenen Abschlusshülse (6), wobei innerhalb der Bohrung (5) eine zu dem zweiten Ende des Steigungskabels (1) korrespondierende Form ausgebildet wird;
b) automatisiertes Fügen der Abschlusshülse (6) auf den Abschnitt, insbesondere auf das zweite Ende des Steigungskabels (1) oder automatisiertes Fügen des Steigungskabels in die Bohrung der Abschlusshülse (6); und
**gekennzeichnet durch** den folgenden Verfahrensschritt:
c) Fixierung der Abschlusshülse (6) an dem Abschnitt, insbesondere dem zweiten Ende des Steigungskabels (1), durch induktive Erhitzung des Steigungskabels.

2. Verfahren nach Anspruch 1, **dadurch gekennzeichnet, dass** die Abschlusshülse (6) durch Verschmelzen und/oder Verschweißen fixiert wird.

3. Verfahren nach einem der Ansprüche 1 oder 2, **dadurch gekennzeichnet, dass** das Ende des Steigungskabels vor dem Verbinden mit der Abschlusshülse bearbeitet wird.

## Claims

1. Method for producing a transmission cable (1), in particular for actuating sunroofs or loading compartment covers of vehicles, to which an end sleeve (6) is attached to a section of the transmission cable (1), in particular at its second end, in order to avoid splicing of the cable (1), comprising the following process steps:
a) producing a transmission cable (1) provided with a helical coil (3) and producing an end sleeve (6) provided with a bore (5), wherein a shape is formed within the bore (5) corresponding to the second end oft he transmission cable (1);
b) automatically joining of the end sleeve (6) onto the section, in particular onto the second end of the transmission cable (1) or automated joining of the transmission cable (1) into the bore of the end sleeve (6)
and **characterized by** the following process step:
c) fixing the end sleeve (6) onto the section, particular onto the second end of the transmission cable (1) by inductive heating of the transmission cable.

2. Method according to Claim 1, **characterized in that** the end sleeve (6) is fixed by melting and/or welding.

3. Method according to Claim 1 or 2, **characterized in that** the end of the transmission cable is machined before connecting with an end sleeve.

## Revendications

1. Procédé de fabrication d'un câble d'entrâinement (1), en particulier pour l'actionnement des toits coulissants ou à des cache-bagages de véhicules, sur lequel un manchon d'extrémité (6) est fixé à une section du câble d'entrâinement (1), en particulier à sa deuxième extrémité, afin d'éviter l'épissure du câble (1), le procédé comportant les étapes procédés:
a) fabrication d'un câble d'entrâinement (1) comprenant une hélice (3) et fabrication un manchon d'extrémité (6) comprenant un forage (5), selon lequel est formé une forme correspondant à la deuxième extrémité du câble d'entrâinement (1) est formé dans le forage (5);
b) assemblage automatisé du manchon d'extrémité (6) à la section, en particulier à la deuxième extrémité du câble d'entrâinement (1) ou assemblage automatisé du câble d'entrâinement dans le forage du manchon d'extrémité (6);
et **caractérisé par** l'étapes procédé:
c) fixation du manchon d'extrémité (6) à la section, en particulier à la deuxième extrémité du câble d'entrâinement (1) par chauffage inductif du câble d'entrâinement.

2. Procédé selon la revendication 1, **caractérisé en ce que** le manchon d'extrémité (6) est fixé par fusion et/ou soudage.

3. Procédé selon la revendication 1 ou 2, **caractérisé en ce que** l'extrémité du câble d'entrâinement est traitement avant d'être connectée au manchon d'extrémité.
